# EUROPEAN PATENT APPLICATION

(11) **EP 4 134 359 A1**
(43) Date of publication of application: **15.02.2023**
(21) Application number: 21784459.6
(22) Date of filing: 09.04.2021
(51) Int. Cl.: C04B 35/80, C04B 35/83, C08J 5/04, F27D 3/12

(54) **C/C COMPOSITE AND METHOD FOR PRODUCING SAME, AND HEAT-TREATMENT JIG AND METHOD FOR PRODUCING SAME**

(30) Priority: 10.04.2020 JP 2020071269
(71) Applicant: Toyo Tanso Co., Ltd., Osaka-shi Osaka 555-0011 (JP)
(72) Inventor: TOMITA, Syuhei, Osaka-shi, Osaka 555-0011 (JP); MACHINO, Hiroshi, Osaka-shi, Osaka 555-0011 (JP); NISHI, Yoko, Osaka-shi, Osaka 555-0011 (JP)
(74) Representative: TBK
(86) International application number: PCT/JP2021/015039
(87) International publication number: WO 2021/206168

(57) **Abstract**

Provided is a C/C composite having a long life in an environment including a heating process and a cooling process and having less adverse effects on surrounding facilities and the quality of treatment objects. A C/C composite in which, in measurement for open pores by mercury porosimetry, an open porosity for open pores with a radius of not less than 0.4 µm and less than 10 µm in the C/C composite is 2.0% or less.

## Description

### Technical Field

The present invention relates to C/C composites and methods for producing C/C composites. The present invention also relates to heat-treatment jigs and methods for producing heat-treatment jigs.

### Background Art

Conventionally, carbon fiber-reinforced carbon composites (C/C composites) are used in a wide range of fields, such as electronics-related field, environmental energy-related field, general industrial furnace-related field, and automobile transport equipment-related field, because they have such characteristics as light weight, high strength, and high elasticity.

Among others, heat-treatment jigs made of C/C composites are more excellent in terms of light weight, less deformability, and so on than those made of metals. Therefore, these heat-treatment jigs are being increasingly used in heat-treatment applications requiring robot conveyance or the like.

Using the above heat-treatment jigs, various types of heat treatments are conducted for the purpose of improving the characteristics of treatment objects to be treated (for example, metallic products). Particularly, for the purpose of increasing the hardness, quenching treatment for quenching objects after being heated to about 1000°C is widely conducted.

Known examples of the quenching method include quenching by gas (gas quenching) and quenching by oil (oil quenching). Among them, oil quenching poses a problem that oil penetrates the C/C composite constituting the heat-treatment jig.

Patent Literature 1 below discloses, as measures to prevent the above oil penetration, a method of impregnating a C/C composite with an organic substance and then firing it, thus filling the pores in the C/C composite with a carbon-based material. Furthermore, Patent Literature 2 below discloses a method of impregnating a C/C composite with silicon to reduce the volume of the pores in the C/C composite.

### Citation List

### Patent Literature

Patent Literature 1: JP-A-2014-162694
Patent Literature 2: JP-A-2004-067478

### Summary of Invention

### Technical Problem

However, the method of impregnating the pores with an organic substance and carbonizing the organic substance in the pores as in Patent Literature 1 and a method of filling the pores with carbon by the CVI (chemical vapor infiltration) process have a problem that oil penetration still cannot sufficiently be reduced. On the other hand, when the pores are impregnated with silicon as in Patent Literature 2, a volume change may occur during conversion of silicon into silicon carbide or cracks may be produced in the C/C composite due to a difference in coefficient of thermal expansion between residual silicon and the C/C composite or the C/C composite converted into silicon carbide. Thus, a problem arises that the volume of the pores in the C/C composite cannot sufficiently be reduced and, therefore, oil penetration still cannot sufficiently be reduced.

If oil penetrates the C/C composite due to oil quenching, the oil remaining in the C/C composite may have adverse effects on the production environment and the quality of treatment objects, such as the production of oil smoke or the coloration of the treatment objects during heating in a tempering process after the quenching or heating in the next quenching process.

Also in other quenching methods, such as gas quenching, the mechanical characteristics of the C/C composite may be degraded by oxidative consumption, which presents a problem of difficulty in elongating the life of the C/C composite.

An object of the present invention is to provide a C/C composite having a long life in an environment including a heating process and a cooling process and having less adverse effects on surrounding facilities and the quality of treatment objects, a method for producing the C/C composite, a heat-treatment jig for which the C/C composite is used, and a method for producing the heat-treatment jig.

### Solution to Problem

In a wide aspect of a C/C composite according to the present invention, in measurement for open pores by mercury porosimetry, an open porosity for open pores with a radius of not less than 0.4 µm and less than 10 µm is 2.0% or less.

In another wide aspect of a C/C composite according to the present invention, in a distribution curve of open porosity versus pore radius measured by mercury porosimetry, the pore radius at which the distribution curve starts to rise from larger pore radii toward smaller pore radii is 3.0 µm or less.

In the present invention, a number of open pores along a direction of fibers in the C/C composite is preferably larger than a number of open pores along a direction orthogonal to the direction of fibers in the C/C composite.

In the present invention, a carbon fiber volume content in the C/C composite determined by image analysis is preferably not less than 58% and not more than 74%.

In the present invention, the C/C composite preferably comprises mesophase pitch-based carbon fibers.

In the present invention, at least part of the open pores in the C/C composite are preferably densified by a densifying material.

In the present invention, at least part of the densifying material may be carbon derived from a CVI process.

In the present invention, at least part of the densifying material may be silicon carbide.

In the present invention, at least part of the densifying material may be a carbonaceous matter derived from a pitch or a thermosetting resin.

In the present invention, at least part of the densifying material may be aluminum phosphate or a mixture of aluminum phosphate and aluminum oxide.

In the present invention, the C/C composite is preferably a unidirectional C/C composite containing unidirectionally oriented carbon fibers and derived from a molded body made by pultrusion molding.

In a wide aspect of a heat-treatment jig according to the present invention, the heat-treatment jig is made of the C/C composite structured according to the present invention.

In another wide aspect of a heat-treatment jig according to the present invention, the heat-treatment jig is made of a unidirectional C/C composite containing unidirectionally oriented carbon fibers and derived from a molded body made by pultrusion molding.

The heat-treatment jig according to the present invention is preferably used in oil quenching.

The heat-treatment jig according to the present invention is preferably used in gas quenching.

In the heat-treatment jig according to the present invention, a corner portion preferably has a structure in which a box joint is secured with pins.

In the heat-treatment jig according to the present invention, a corner portion may be reinforced by a 2D-C/C composite.

A method for producing a C/C composite according to the present invention includes the steps of: impregnating unidirectionally aligned carbon fibers with a thermosetting resin composition and then pultruding the carbon fibers impregnated with the thermosetting resin composition to obtain a molded body; and firing the molded body to carbonize the thermosetting resin composition, thus obtaining a C/C composite.

In the present invention, a carbon fiber volume content in the molded body is preferably not less than 55% and not more than 75%.

The method for producing a C/C composite according to the present invention preferably further includes a densifying step of densifying at least part of open pores in the C/C composite.

In the present invention, the densifying step may include the step of impregnating the open pores in the C/C composite with a pitch or a thermosetting resin and carbonizing the pitch or the thermosetting resin.

In the present invention, the densifying step may include the step of subjecting the C/C composite to a CVD process.

In the present invention, the densifying step may include the step of impregnating the open pores in the C/C composite with molten silicon and converting the silicon to silicon carbide.

In the present invention, the densifying step may include the step of impregnating the open pores in the C/C composite with aluminum phosphate and thermally treating the C/C composite.

A method for producing a heat-treatment jig according to the present invention is a method for producing a heat-treatment jig made of a C/C composite and includes the step of obtaining the C/C composite using the method for producing a C/C composite configured according to the present invention.

### Advantageous Effects of Invention

The present invention enables provision of a C/C composite having a long life in an environment including a heating process and a cooling process and having less adverse effects on surrounding facilities and the quality of treatment objects, a method for producing the C/C composite, a heat-treatment jig for which the C/C composite is used, and a method for producing the heat-treatment jig.

### Brief Description of Drawings

[Fig. 1] Fig. 1 is a schematic perspective view showing a molded body which is a precursor of a UD-C/C composite.
[Fig. 2] Fig. 2 is a photograph showing an X-Z surface of the UD-C/C composite.
[Fig. 3] Fig. 3 is a photograph showing a Y-Z surface of the UD-C/C composite.
[Fig. 4] Fig. 4 is a schematic perspective view showing an example of a corner portion having a structure in which a box joint is secured with pins.
[Fig. 5] Fig. 5 is a schematic perspective view showing an example of a corner portion composed of a 2D-C/C composite reinforcing member and bolts.
[Fig. 6] Fig. 6 is a graph showing respective cumulative open porosities in Example 1, Example 2, and Comparative Example 1.
[Fig. 7] Fig. 7 is a graph showing respective cumulative open porosities in Examples 3 and 4.
[Fig. 8] Fig. 8 is a graph showing respective distributions of open porosities in Example 1, Example 2, and Comparative Example 1.
[Fig. 9] Fig. 9 is a graph showing respective distributions of open porosities in Examples 3 and 4.
[Fig. 10] Fig. 10 is a graph showing results of experimental examples representing the relationship between open porosity for open pores with a radius of 0.4 µm or more and amount of oil penetration.
[Fig. 11] Fig. 11 is a graph showing results of experimental examples representing the relationship between open porosity for open pores with a radius of not less than 0.4 µm and less than 10.0 µm and amount of oil penetration.
[Fig. 12] Fig. 12 is a graph showing the relationship between pore radius at which an open porosity distribution curve starts to rise and amount of oil penetration.
[Fig. 13] Fig. 13 is a schematic perspective view showing a molded body which is a precursor of a 2D-C/C composite.
[Fig. 14] Fig. 14 is a photograph showing an X-Z surface or a Y-Z surface of the 2D-C/C composite.
[Fig. 15] Fig. 15 is a schematic perspective view showing an example of a corner portion having a structure in which a mortise-tenon joint is secured with T-shaped pins.
[Fig. 16] Fig. 16 is a schematic perspective view showing, from another angle, the example of a corner portion having a structure in which a mortise-tenon joint is secured with T-shaped pins.

### Description of Embodiments

Hereinafter, a description will be given of details of the present invention.

### (C/C Composite and Heat-Treatment Jig)

A C/C composite according to the present invention is a carbon fiber-reinforced carbon composite material. A heat-treatment jig according to the present invention is made of the C/C composite according to the present invention.

In a first invention, in measurement for open pores by mercury porosimetry, the open porosity for open pores with a radius of not less than 0.4 µm and less than 10 µm in the C/C composite is 2.0% or less. The open porosity can be determined by multiplying the cumulative pore volume per gram of the C/C composite measured by the mercury porosimetry by the bulk density of the C/C composite measured by the mercury porosimetry.

The open porosity for open pores with a radius of not less than 0.4 µm and less than 10 µm can be determined by subtracting the open porosity for open pores with a radius of 10 µm or more from the open porosity for open pores with a radius of 0.4 µm or more. The cumulative pore volume based on mercury porosimetry can be measured, for example, in a range of pore radii of 0.003 µm to 100 µm.

As just described, in terms of the first invention, the Inventors focused on the open porosity for open pores with a radius of not less than 0.4 µm and less than 10 µm in the C/C composite and found that the open porosity for open pores in this range correlates with oil penetration into the C/C composite during oil quenching. Specifically, the Inventors found that when the open porosity for open pores with a radius of not less than 0.4 µm and less than 10 µm in the C/C composite is reduced to 2.0% or less, oil penetration into the C/C composite due to oil quenching can be effectively reduced. Furthermore, the Inventors further found that, in this case, oxidative consumption of the C/C composite can be effectively reduced and, therefore, this technique is also suitable for gas quenching.

When the pore radius is larger than 10 µm, asperities due to a below-described CVI (chemical vapor infiltration) process which is a type of CVD (chemical vapor deposition) process may reflect on the measurement of open porosity and, therefore, the open porosity may not be able to be accurately measured. The inventors found that as long as the pore radii of open pores are in a range of not less than 0.4 µm and less than 10 µm, the open porosities for the open pores can be measured without reflection of asperities and the like due to the CVI process.

In the first invention, the open porosity for open pores with a radius of not less than 0.4 µm and less than 10 µm is preferably 1.0% or less and more preferably 0.3% or less. In this case, oil penetration due to oil quenching and oxidative consumption due to gas quenching can be further reduced. The lower limit of the open porosity for open pores with a radius of not less than 0.4 µm and less than 10 µm is not particularly limited, but can be set, for example, at 0.1% from a production viewpoint.

In a second invention, a C/C composite is used in which, in a distribution curve of open porosity versus pore radius measured by mercury porosimetry, the pore radius at which the distribution curve starts to rise from larger pore radii toward smaller pore radii is 3.0 µm or less. The above open porosity distribution curve can be determined by differentiating the cumulative open porosity measured by mercury porosimetry with respect to pore radius. Also the open porosity distribution curves in examples to be described hereinafter will be determined in the same manner.

A detailed description will be given below of how to determine the pore radius at which the distribution curve of open pore diameters starts to rise.
(i) Each of the open porosities is divided by the maximum open porosity, thus obtaining a distribution of relative open porosities with 100% representing the maximum open porosity.
(ii) An increment in relative open porosity is divided by a decrement in log (pore diameter), thus obtaining the gradient of a distribution curve of the open porosities.
(iii) Next, the distribution curve of relative open porosities is checked from larger pore radii toward smaller pore radii to find a region of the distribution curve in which the open porosity continuously increases from 0% to near 10%.
(iv) A point on the distribution curve where the relative open porosity continuously indicates 1.0% or more and the gradient continuously takes a value of 0.1%/log (µm) is defined as the pore radius at which the distribution of open pore diameters rises.

As just described, in terms of the second invention, the Inventors focused on the distribution curve of open porosities in the C/C composite and found that the pore radius at which the distribution curve starts to rise correlates with oil penetration into the C/C composite during oil quenching. Specifically, the Inventors found that when the pore radius at which the distribution curve of open porosities starts to rise is 3.0 µm or less, oil penetration into the C/C composite due to oil quenching can be effectively reduced. Furthermore, the Inventors further found that, in this case, oxidative consumption of the C/C composite during gas quenching can be effectively reduced.

In the second invention, the pore radius at which the distribution curve of open porosities starts to rise is preferably 2.0 µm or less and more preferably 0.5 µm or less. In this case, oil penetration due to oil quenching and oxidative consumption can be further reduced. The lower limit of the pore radius at which the distribution curve of open porosities starts to rise is not particularly limited, but can be set, for example, at 0.1 µm from a production viewpoint.

In a third invention, a unidirectional C/C composite (referred to also as a UD-C/C composite and hereinafter referred to also as a UD-C/C) in which carbon fibers are unidirectionally oriented is used as the C/C composite. Furthermore, in the third invention, the C/C composite is formed by pultrusion molding.

As just described, in terms of the third invention, the Inventors focused on the unidirectional C/C composite containing unidirectionally oriented carbon fibers and derived from a molded body made by pultrusion molding. The inventors found that, by using the above unidirectional C/C composite, the open porosity for open pores with a radius of not less than 0.4 µm and less than 10 µm in the C/C composite can be reduced and, thus, oil penetration into the C/C composite due to oil quenching can be effectively reduced. Furthermore, the Inventors further found that, in this case, oxidative consumption of the C/C composite during gas quenching can be effectively reduced.

The reason why the UD-C/C composite can reduce the open porosity for open pores with a radius of not less than 0.4 µm and less than 10 µm can be explained as follows.

The C/C composite can be obtained by: impregnating carbon fibers with a thermosetting resin composition and then molding the carbon fibers impregnated with the thermosetting resin composition to obtain a molded body; and firing the molded body.

In doing so, the molded body which is a precursor of the C/C composite contracts due to thermal decomposition of a resin component in the firing step. However, the molded body cannot contract in the fiber direction of the carbon fibers and, therefore, the matrix thereof is extended in the fiber direction in the process of carbonization. If, in this case, carbon fibers exist also in a direction perpendicular to the direction of extension, the molded body cannot contract in the perpendicular direction, which may result in production of large pores and cracks.

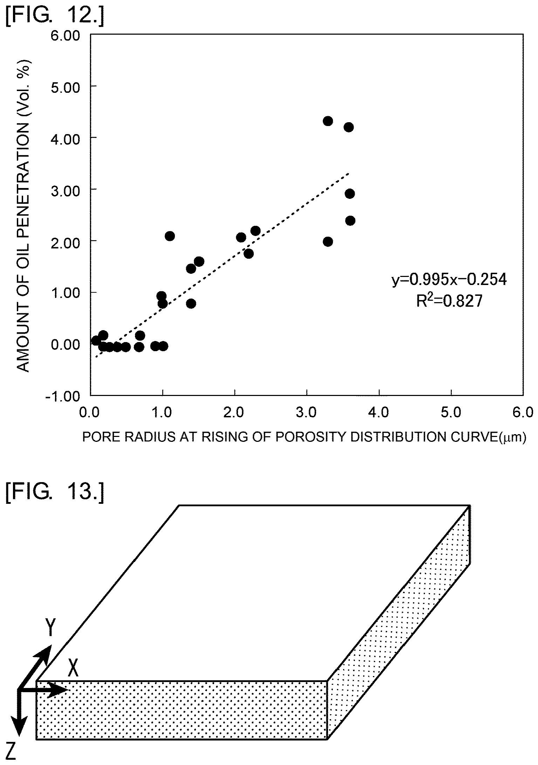

Fig. 13 is a schematic perspective view showing a molded body which is a precursor of a 2D-C/C composite. In the figure, the X direction and Y direction are fiber directions. The Z direction is a thickness direction of the composite.

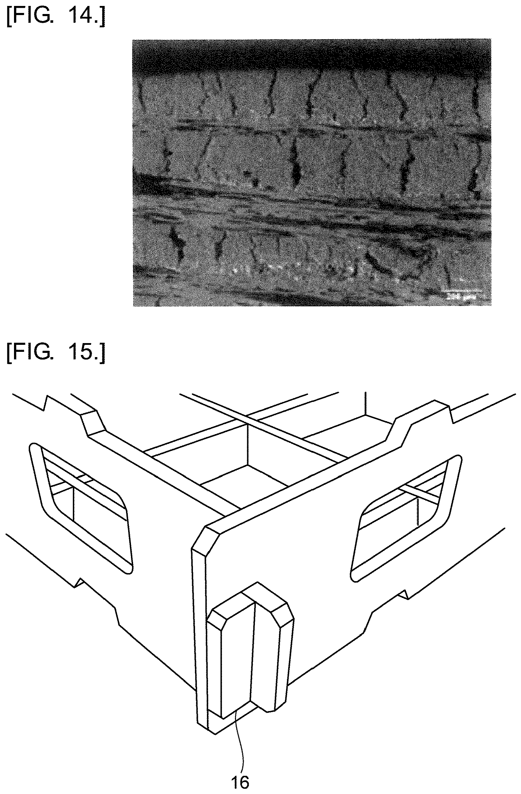

A molded body which is a precursor of a two-directional C/C composite (referred to also as a 2D-C/C composite and hereinafter referred to also as a 2D-C/C), hereinafter referred to as a 2D-C/C molded body, contains continuous carbon fibers in the X direction and Y direction (i.e., in a 2D cross-plane) and, therefore, cannot contract in these directions in the firing step. However, the 2D-C/C molded body can contract in the Z direction (thickness direction) because no continuous carbon fibers exist in this direction. Therefore, as shown by the photograph in Fig. 14, when the X-Z surface or the Y-Z surface of the 2D-C/C composite obtained by the firing are observed, the production of large cracks (pores) at regular intervals can be found.

Unlike the 2D-C/C composite, in the UD-C/C composite, carbon fibers are oriented in a single direction. Therefore, the matrix extended in the fiber direction in the firing step can contract in a direction perpendicular to the fiber direction. For this reason, the UD-C/C composite is less likely to produce cracks and large pores.

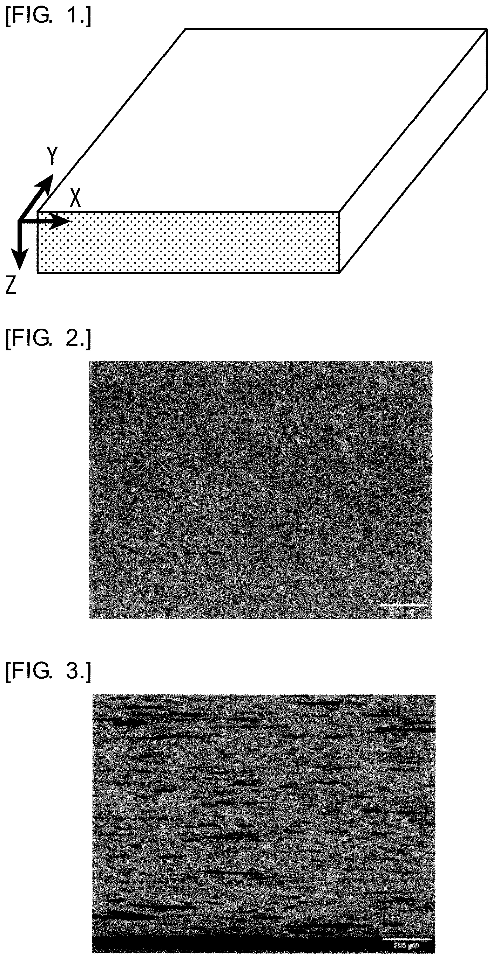

Fig. 1 is a schematic perspective view showing a molded body which is a precursor of a UD-C/C composite. In the figure, the Y direction is a fiber direction. The X direction is orthogonal to the Y direction. The Z direction is a thickness direction of the composite.

As shown in Fig. 1, the UD-C/C composite is less contractible in the Y direction (fiber direction) since it contains continuous carbon fibers in this direction, but is contractible in the X and Z directions since it contains no continuous carbon fibers in these directions. Therefore, neither large pores nor cracks are observed in the X-Z surface and Y-Z surface of the C/C composite. Hence, as shown by the photographs in Figs. 2 and 3, the UD-C/C composite obtained by firing can have small open pore diameters and a low open porosity. The UD-C/C composite having these pore characteristics can be largely reduced in oil penetration. In addition, the UD-C/C composite having the above pore characteristics not only has excellent mechanical characteristics in the fiber direction, but also has excellent oxidation resistance because it has a small surface area.

Furthermore, because the generation of pores in the UD-C/C composite occurs along the fiber direction, exposure of a large number of pore end surfaces is observed only on the X-Z surface and exposure of pore end surfaces is usually not observed in the X-Z surface and Y-Z surface. Therefore, the generated pores can be relatively easily filled in by a densification treatment and, thus, oil penetration into the C/C composite can be more effectively reduced. In addition, oxidative consumption can also be more effectively reduced. Hence, even when the C/C composite contains pores, it is desirable for the C/C composite to contain continuous pores only in one direction as described above.

By using the above UD-C/C composite, the open porosity in the first invention can be reduced and the pore radius at which the distribution curve of open porosities starts to rise in the second invention can be reduced.

As seen from the above, the C/C composites having the pore characteristic in the first invention and the second invention can be easily obtained when they are UD-C/C composites. However, these C/C composites can also be obtained from 2D-C/C composites, for example, by subjecting them to a CVI process for a period about ten times longer than a normal process time. Nevertheless, the UD-C/C composite is preferably used from the viewpoint of productivity and production cost.

In other words, the C/C composite according to the present invention may be a 2D-C/C composite or another C/C composite so long as the open porosity in the first invention is equal to or less than the above upper limit. Furthermore, the C/C composite according to the present invention may be a 2D-C/C composite or another C/C composite so long as the pore radius at which the distribution curve of open porosities starts to rise in the second invention is equal to or less than the above upper limit.

As seen from the above, the first to third inventions may be used singly or in combination of some or all of them.

Hereinafter, the first to third inventions may be referred to collectively as the present invention.

The C/C composite and heat-treatment jig according to the present invention are less likely to cause oil penetration due to oil quenching. Therefore, the production of oil smoke in a tempering process after the quenching or in the next quenching process can be reduced and the coloration of treatment objects can be less likely to occur. Hence, the C/C composite and heat-treatment jig according to the present invention is less likely to have adverse effects on the production environment and the quality of treatment objects. Furthermore, the heat-treatment jig according to the present invention is less likely to cause oxidative consumption in other cooling processes, such as gas quenching, and therefore has excellent oxidation resistance. Therefore, the heat-treatment jig can be a long-life jig having excellent mechanical characteristics. In addition, by wrapping the surface of the C/C composite with a cover made of metal, such as SUS, the life time of the heat-treatment jig can be further elongated. Hence, the present invention enables provision of a C/C composite having a long life in an environment including a heating process and a cooling process and having less adverse effects on surrounding facilities and the quality of treatment objects, and a high-quality heat-treatment jig for which the C/C composite is used.

The heat-treatment jig according to the present invention can be suitably used for the purpose of oil quenching since is less likely to cause oil penetration. In addition, the heat-treatment jig can also be suitably used for the purpose of gas quenching since it is less likely to cause oxidative consumption.

When mesophase pitch-based high-strength carbon fibers are used in the C/C composite, a heat-treatment jig having high oxidation resistance and high strength can be obtained and, therefore, is suitable for use in gas quenching and can be used for other members requiring mechanical strength.

In the present invention, the pores in the C/C composite may be densified by a densifying material. In this case, the open porosity for open pores with a radius of not less than 0.4 µm and less than 10 µm in the C/C composite and the pore radius at which the distribution curve of open porosities starts to rise can be further reduced. Therefore, oil penetration and oxidative consumption can be further reduced.

The type of the densifying material is not particularly limited and examples thereof that can be used include carbon derived from CVI process, pitches, carbonaceous materials derived from thermosetting resins, silicon carbide, aluminum phosphate, and a mixture of aluminum phosphate and aluminum oxide. These materials may be used singly or in combination of two or more of them.

Also when the C/C composite has pores, like a UD-C/C composite, the number of open pores in the C/C composite along the fiber direction is preferably larger than the number of open pores in the C/C composite along the direction orthogonal to the fiber direction. In this case, the pores can be more easily filled in by the densifying material, and the open porosity for open pores with a radius of not less than 0.4 µm and less than 10 µm in the C/C composite and the pore radius at which the distribution curve of open porosities starts to rise can be further reduced. Therefore, oil penetration and oxidative consumption can be further reduced.

### (Production Method of C/C Composite and Heat-Treatment Jig)

A description will be given below of an example of a method for producing a C/C composite and a heat-treatment jig according to the present invention. In the method for producing a heat-treatment jig according to the present invention, a heat-treatment jig made of a C/C composite is produced.

Specifically, first, carbon fibers are impregnated with a thermosetting resin composition and then molded, thus obtaining a molded body.

Examples of the carbon fibers that can be used include polyacrylonitrile-based carbon fibers (PAN-based carbon fibers) and pitch-based carbon fibers. The carbon fibers used are preferably unidirectionally aligned carbon fibers to form a UD-C/C composite. The thermosetting resin composition may be composed only of a thermosetting resin or may contain a thermosetting resin and any additive. The thermosetting resin composition may contain a pitch. The molded body is preferably a body molded by pultrusion molding. In this case, the carbon fibers can be more easily unidirectionally aligned and, therefore, a molded body having a higher carbon fiber volume content can be obtained. The shape of the molded body is not particularly limited and may be, for example, a flat-plate shape or a round-bar shape.

The UD-C/C composite may be obtained by unidirectionally aligning prepregs containing carbon fiber tows impregnated with a thermosetting resin, such as phenolic resin, and molding the prepregs in a mold.

Next, the molded body is fired to carbonize the thermosetting resin composition, thus obtaining a C/C composite.

Normally, the firing step is preferably performed in a non-oxidizing atmosphere, such as a nitrogen gas atmosphere, in order to prevent the C/C composite during production from being oxidized.

The firing temperature is not particularly limited, but may be, for example, not lower than 700°C and not higher than 1300°C. The firing time is not particularly limited, but the maximum temperature retention time may be, for example, not less than 30 minutes and not more than 600 minutes.

In order to obtain a denser C/C composite, a cycle of impregnation with a pitch and firing may be repeatedly performed. The pitch impregnation/firing step can be performed, for example, in a range of once to ten times.

In the present invention, the production method may further include a densifying step of densifying at least part of open pores in the C/C composite. In this case, the open porosity for open pores with a radius of not less than 0.4 µm and less than 10 µm in the C/C composite and the pore radius at which the distribution curve of open porosities starts to rise can be further reduced. Therefore, oil penetration and oxidative consumption can be further reduced.

An example of the densifying step that can be used is the step of impregnating the open pores in the C/C composite with a pitch or a thermosetting resin and carbonizing the pitch or thermosetting resin.

The densifying step may be the step of subjecting the C/C composite to a CVI process.

The densifying step may be the step of impregnating the open pores in the C/C composite with molten silicon and converting the silicon to silicon carbide.

Alternatively, the densifying step may be the step of impregnating the open pores in the C/C composite with aluminum phosphate and thermally treating the C/C composite.

These densifying steps may be used singly or in combination of two or more of them.

A well-conditioned UD-C/C composite having no cracks or any other defects can be easily reduced in open porosity using a technique, such as pitch impregnation, resin impregnation, CVI process, silicon impregnation or aluminum phosphate impregnation. The reason for this is that because the pore radius of the UD-C/C composite is smaller than that of a 2D-C/C composite and the pore shape thereof is parallel to the fibers, the entrances of the open pores can be easily plugged to turn the open pores into closed pores. Thus, the amount of oil penetration can be reduced to 1% by volume or less which is less than 90% of the amount of oil penetration in a conventional 2D-C/C and can be reduced to substantially zero depending on conditions.

However, also in the 2D-C/C composite, the amount of oil penetration can be reduced, for example, by subjecting it to a CVI process for a period about ten times longer than a normal process time. Nevertheless, the UD-C/C composite is preferably used from the viewpoint of productivity and production cost.

### (Fiber Volume Content)

In order to obtain a well-conditioned C/C composite, controlling the carbon fiber volume content (Vf) is a very important factor. If Vf is too low, a resin-rich portion and a resin-poor portion are formed and, therefore, cracks occur in the resin-rich portion after the firing. If Vf is too high, the friction acting on the molded body when pultruded is too large, which may prevent the molded body from being pulled out from the mold or may deform the molded body.

In the present invention, the carbon fiber volume content (molded body Vf) in a molded body, which is a precursor of a C/C composite, is preferably not less than 55% and not more than 75%. The carbon fiber volume content in a molded body can be determined by dividing the volume of carbon fibers per meter by the volume of the molded body per meter.

In the present invention, the carbon fiber volume content (image analysis Vf) in the C/C composite determined by image analysis is more preferably not less than 58% and not more than 74%.

The image analysis Vf of the C/C composite can be determined based on the product of the number of carbon fibers per mm² determined by image analysis and the area per carbon fiber determined by image analysis, or from the proportion of the total area of carbon fibers per mm². As for the UD-C/C composite, because it can be considered to be homogeneous in the fiber direction of carbon fibers, the proportion of the total area of carbon fibers per mm² determined in the above manner can be used as the image analysis Vf of the C/C composite. The area per carbon fiber can be obtained from the diameters of the carbon fibers determined by image analysis and, for example, may be defined as an average value of respective areas of 100 or more arbitrary carbon fibers.

In a commonly used method for determining Vf of the C/C composite using only Vf of the molded body and the rate of change in cross-sectional area when the molded body is turned to a C/C, the change in diameter of carbon fibers is not taken into consideration. On the other hand, in determining Vf of the C/C composite by image analysis, the change in diameter of carbon fibers can be taken into consideration. Therefore, Vf of the C/C composite can be more accurately measured.

### (Structure of Heat-Treatment Jig)

The heat-treatment jig according to the present invention is not particularly limited and, for example, those having conventionally known shapes, such as a heat-treatment basket or tray, can be used. The planar shape of the heat-treatment jig according to the present invention may be, for example, a grid-like shape and is not particularly limited.

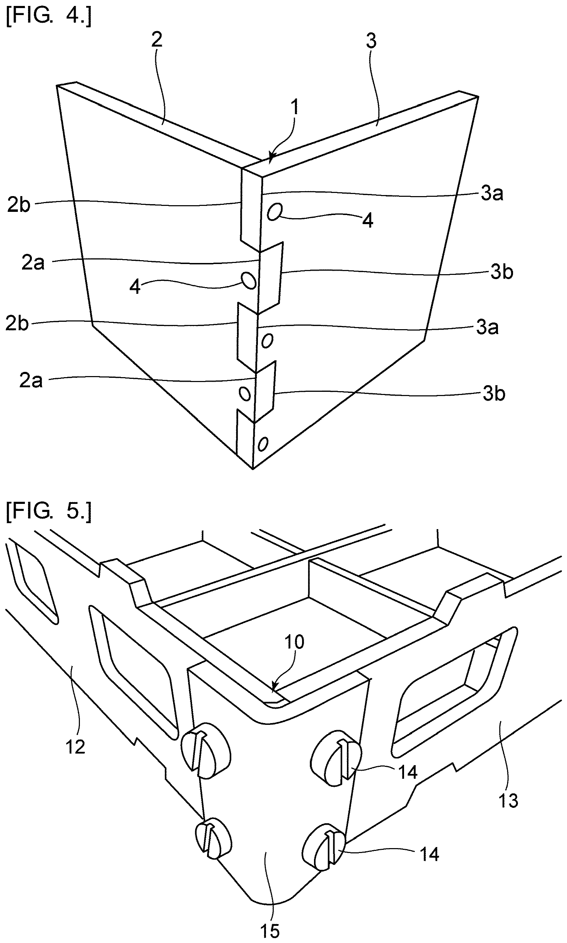

The shape of the corner portion is also not particularly limited and, for example, the corner portion may have a structure in which a box joint is secured with pins as shown in Fig. 4. In the structure in which a box joint is secured with pins as shown in Fig. 4, first and second flat plates 2, 3 having their lengthwise directions extending in the fiber directions of respective UD-C/C composites are secured at a corner portion 1 with pins 4. More specifically, at an end of the first flat plate 2 constituting one part of the corner portion 1, projecting tongues 2a and grooves 2b are alternately provided in the height direction. Likewise, also at an end of the second flat plate 3 constituting the other part of the corner portion 1, projecting tongues 3a and grooves 3b are alternately provided in the height direction. This type of joint is called a box joint. Each of the tongues 2a of the first flat plate 2 and a corresponding one of the grooves 3b of the second flat plate 3 are provided to mate with each other at the corner portion 1, and each of the mating portions is secured with a pin 4. Furthermore, each of the grooves 2b of the first flat plate 2 and a corresponding one of the tongues 3a of the second flat plate 3 are provided to mate with each other at the corner portion 1, and each of the mating portions is secured with a pin 4. Thus, each corner portion is pinned. When, in doing so, pins made of a UD-C/C are used as the pins 4, all the members of the jig are made of UD-C/C, which enables minimization of oil penetration and reduction of the parts count.

A structure shown in Fig. 5, which is reinforced with an L-shaped, 2D-C/C reinforcing member secured with bolts, is likewise made of a UD-C/C composite, wherein first and second flat plates 12, 13 having their lengthwise directions equal to the fiber directions are secured at a corner portion 10 with bolts 14. Specifically, in Fig. 5, an L-shaped 2D-C/C composite 15 is superposed only at the corner portion 10 on the first and second flat plates 12, 13 made of a UD-C/C composite. Then, the L-shaped 2D-C/C composite 15 and the first and second flat plates 12, 13 are secured with bolts 14. Thus, each corner portion 10 is securely fixed. In this case, the preferred L-shaped 2D-C/C composite 15 for use is a 2D-C/C composite in which the volume of pores is reduced by resin impregnation, a CVI process or any other technique.

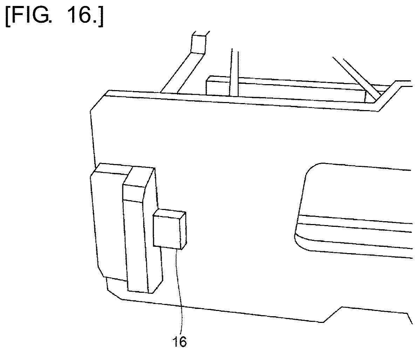

Meanwhile, when a corner portion is secured by a structure shown in Figs. 15 and 16 in which a mortise-tenon joint is secured with T-shaped pins 16, the UD-C/C composite may be broken because of poor strength in the direction orthogonal to the fiber direction. To prevent this, in the case of CFRP, for example, it may be effective to attach a 2D cloth to the surface of the CFRP. However, if the CFRP produced in this manner is fired for the purpose of producing a C/C composite, there arises a problem that the cloth is easily peeled off due to a difference in the rate of shrinkage in the X direction between the 2D cloth disposed on the surface of the CFRP and the UD cloth.

As a solution to the above problem, the inventors found that when the heat-treatment jig has corner portions having a structure shown in Figs. 4 or 5, this makes it less likely that breakage and other problems occur even with the use of a UD-C/C composite having poor strength in the direction orthogonal to the direction of carbon fibers, and the corner portions can be securely fixed.

Next, the present invention will be demonstrated with concrete examples of the present invention and comparative examples. However, the present invention is not limited to the following examples.

### (Example 1)

A product obtained by paralleling 380 tows made of PAN-based 24K high-strength carbon fibers (modulus of elasticity: 230 GPa, tensile strength: 5 GPa, fineness: 1.65 g/m, true density: 1.82 g/cm³) and impregnating them with a resol-type phenolic resin (non-volatile content: 60%, carbon yield: 70%) was used to subject it to pultrusion molding at a rate of 0.4 m/min while holding a 1.5 m-long mold with a 100 mm × 5 mm opening at 170°C. A flat-plate molded body thus obtained was cut to a length of 1 m.

The obtained flat-plate molded body was initially fired at a temperature of 1000°C in a nitrogen atmosphere. Subsequently, the flat-plate molded body was impregnated with a pitch (softening point: 80°C, QI component: 5% or less) under a pressure of 1 MPa and then thermally treated again at a temperature of 1000°C in a nitrogen atmosphere. Subsequently, the flat-plate molded body was thermally treated at 2000°C in a nitrogen atmosphere, thus obtaining a UD-C/C of Example 1.

### (Example 2)

A UD-C/C obtained in Example 1 was further subjected to a CVI process. Specifically, the UD-C/C was raised in temperature to 1100°C and then impregnated with pyrolytic carbon by flowing propane gas at a flow rate of 10 (L/min) onto the UD-C/C sample while keeping the pressure controlled at 10 Torr for 80 hours, thus obtaining a UD-C/C of Example 2.

### (Example 3)

A UD-C/C of Example 3 was obtained in the same manner as in Example 1 except that using a 1.5 m-long mold with a circular opening of a diameter of 10 mm, 57 tows were paralleled and a round-bar molded body was obtained.

### (Example 4)

A UD-C/C obtained in Example 3 was further subjected to a CVI process. Specifically, the UD-C/C was raised in temperature to 1100°C and then impregnated with pyrolytic carbon by flowing propane gas at a flow rate of 10 (L/min) onto the UD-C/C sample while keeping the pressure controlled at 10 Torr for 80 hours, thus obtaining a UD-C/C of Example 4.

### (Example 5)

A UD-C/C of Example 5 was obtained in the same manner as in Example 1 except that the number of cycles of pitch impregnation and firing was changed to 3.

### (Example 6)

A UD-C/C obtained in Example 1 was immersed into a pitch (softening point: 80°C, QI content: 5% or less) under reduced pressure, then subjected to a process of pitch impregnation under a pressure of 1 MPa once, and then fired at a temperature of 1000°C in a nitrogen atmosphere, thus obtaining a UD-C/C of Example 6.

### (Example 7)

Metallic silicon particles having an average particle diameter of 50 µm and a starch glue as a binder component having a weight ratio of 10% were added and mixed with water, thus obtaining a slurry having a metallic silicon concentration of 50%. Next, the obtained slurry was applied to a UD-C/C obtained in Example 1 and then dried and the UD-C/C was then thermally treated at 1600°C for three hours, thus obtaining a UD-C/C of Example 7.

### (Example 8)

A UD-C/C obtained in Example 1 was impregnated with an aluminum phosphate aqueous solution having a non-volatile content of 38%, dried, and thermally treated at 800°C for three hours, thus obtaining a UD-C/C of Example 8.

### (Example 9)

A 2D-C/C (obtained by adding phenolic resin to high-strength PAN-based carbon fibers, subjecting them to press molding, then repeatedly subjecting them to pitch impregnation and firing for densification) was further subjected to a CVI process. Specifically, the 2D-C/C was raised in temperature to 1100°C and then impregnated with pyrolytic carbon by flowing propane gas at a flow rate of 10 (L/min) onto the 2D-C/C sample while keeping the pressure controlled at 10 Torr for 80 hours, thus obtaining a 2D-C/C of Example 9.

### (Example 10)

CVI carbon films on the x-y surface and y-z surface of a UD-C/C subjected to a CVI process in Example 2 were abraded off with #80 sandpaper, but only a CVI carbon film on the x-z surface was left, thus obtaining a UD-C/C of Example 10. In Example 10, the number of open pores in the fiber direction was larger than the number of open pores in the direction orthogonal to the fiber direction. In Example 10, the amount of oil penetration to be described hereinafter was 0.6% by volume and was reduced to 40% of an amount of oil penetration of 1.5% by volume in the UD-C/C (Example 1) not subjected to the CVI process.

### (Example 11)

A CVI carbon film on the x-z surface of a UD-C/C subjected to a CVI process in Example 2 was abraded off with #80 sandpaper, but CVI carbon films was left only on the x-y surface and y-z surface, thus obtaining a UD-C/C of Example 11. In Example 11, the amount of oil penetration was 1.3% by volume and reduced only to 87% of an amount of oil penetration of 1.5% by volume in the UD-C/C (Example 1) not subjected to the CVI process, and the effect of reducing the amount of oil penetration was low as compared to Example 10. This can be interpreted to mean that pores were mainly formed along the fiber direction, many pore end surfaces were exposed on the x-z surface, and less pore end surfaces were exposed on the x-y surface and y-z surface.

### (Examples 12 to 16 and Comparative Examples 6 to 9)

In the same manner as in Example 3, round-bar molded bodies were produced by pultrusion molding and respective UD-C/Cs of examples and comparative examples were obtained. In doing so, the number of CFs (number of carbon fibers) was varied from example to example, thus obtaining molded bodies having different Vf (fiber volume contents) as shown in Table 1. The molded body having a Vf of 50% (Comparative Example 9) and the molded body having a Vf of 55% (Example 12) produced cracks, and the molded body having a Vf of 58% (Example 13) produced finer cracks than the molded body having a Vf of 55% (Example 12). The molded bodies having a Vf of 64 to 66% (Examples 14 to 16) were obtained as good molded bodies. The molded bodies having a Vf of 73 to 75% (Comparative Examples 6 to 7) could be obtained by pultrusion, but produced deformity. The molded body having a Vf of 77% (Comparative Example 8) had excessively high pultrusion resistance, resulting in failure in pultrusion.

### (Examples 17 to 23)

In the same manner as in Example 4, round-bar molded bodies were produced by pultrusion molding and subjected to a CVI process, thus obtaining respective UD-C/Cs of examples. In doing so, the number of CFs (number of carbon fibers) was varied from example to example, thus obtaining molded bodies having different Vf (fiber volume contents) as shown in Table 1.

### (Example 24)

A UD-C/C of Example 24 was obtained in the same manner as in Example 3 except that 55 12K tows were paralleled using high-strength mesophase pitch-based carbon fibers (tensile modulus of elasticity: 640 GPa, tensile strength: 3 GPa) instead of the PAN-based 24K high-strength carbon fibers.

### (Example 25)

A UD-C/C obtained in Example 24 was further subjected to a CVI process. Specifically, the UD-C/C was raised in temperature to 1100°C and then impregnated with pyrolytic carbon by flowing propane gas at a flow rate of 10 (L/min) onto the UD-C/C sample while keeping the pressure controlled at 10 Torr for 80 hours, thus obtaining a UD-C/C of Example 25.

### (Comparative Example 1)

A 2D-C/C (obtained by adding phenolic resin to PAN-based carbon fibers, subjecting them to press molding, and then repeatedly subjecting them to pitch impregnation and firing for densification) was used as a 2D-C/C of Comparative Example 1 as it was.

### (Comparative Example 2)

A 2D-C/C (obtained by adding phenolic resin to PAN-based carbon fibers, subjecting them to press molding, and then repeatedly subjecting them to pitch impregnation and firing for densification) was further subjected to a CVI process. Specifically, the 2D-C/C was raised in temperature to 1100°C and then impregnated with pyrolytic carbon by flowing propane gas at a flow rate of 10 (L/min) onto the 2D-C/C sample while keeping the pressure controlled at 10 Torr for 80 hours, thus obtaining a 2D-C/C of Comparative Example 2.

### (Comparative Example 3)

A 2D-C/C of Comparative Example 1 was subjected to the same process as in Example 7, thus obtaining a 2D-C/C of Comparative Example 3.

### (Comparative Example 4)

Unidirectional carbon fiber cloths (UD cloths) in which high-strength PAN-based carbon fibers of the same type as in Example 1 and acrylic organic fibers as weft were used were impregnated with a phenolic resin of the same type as in Example 1, thus obtaining unidirectional prepregs (UD prepregs). The UD prepregs were layered and pressed at 160°C in a hot press, thus obtaining a molded body. Thereafter, the molded body was subjected to the same process as in Example 1, thus obtaining a UD-C/C of Comparative Example 4.

### (Comparative Example 5)

Unidirectional prepregs (UD prepregs) were obtained by impregnating high-strength PAN-based carbon fibers of the same type as in Example 1 with a phenolic resin of the same type as in Example 1 and unidirectionally paralleling the carbon fibers with a filament winding machine. The UD prepregs were layered in a mold and pressed at 160°C therein, thus obtaining a molded body. Thereafter, the molded body was subjected to the same process as in Example 1, thus obtaining a UD-C/C.

### (Comparative Example 10)

In the same manner as in Example 2, a flat-plate molded body was produced by pultrusion molding and subjected to a CVI process, thus obtaining a UD-C/C of Comparative Example 10. In doing so, the number of CFs (number of carbon fibers) was varied from Example 2 to obtain a molded body having a Vf (fiber volume content) of 50% as shown in Table 1.

### [Evaluations]

### (Measurement of Bulk Density and True Density)

The bulk density was calculated by measuring the dimensions and mass of a cuboid obtained by mechanically processing the C/C composite. The true density was obtained by measuring crushed sample by the liquid-phase immersion method using butanol.

### (Measurement for Open Pores)

The obtained C/C composite was cut into a 5-mm square, thus obtaining a sample for mercury porosimetry. This sample was measured with a mercury porosimeter (AutoPore IV 9500 manufactured by Micromeritics Instrument Corporation) and the open porosity for each pore radius was calculated from the cumulative pore volume and the bulk density. The open porosity for overall pore radius was calculated from the cumulative pore volume in a range of pore radii of 68.7 to 0.0074 µm. The closed porosity was calculated from the difference between the total porosity and the open porosity. In the mercury porosimetry, the maximum pressure applied was 207 MPa and the pore radius was determined based on the Washburn equation from the pressure of mercury applied by the mercury porosimeter. The Washburn equation is expressed as: r = -2δ cosθ/P, where r represents the pore radius, δ represents the surface tension of mercury (480 mN/m), θ represents the contact angle (a value of 141.3° was used in the present invention), and P represents the pressure.

The overall open porosity, the open porosity for open pores with a radius of 0.1 µm or more, the open porosity for open pores with a radius of 0.4 µm or more, the open porosity for open pores with a radius of 1 µm or more, and the open porosity for open pores with a radius of 10 µm or more were determined from the above cumulative pore volume. The open porosity for open pores with a radius of not less than 0.4 µm and less than 10 µm was obtained from the difference between the open porosity for open pores with a radius of 0.4 µm or more and the open porosity for open pores with a radius of 10 µm or more.

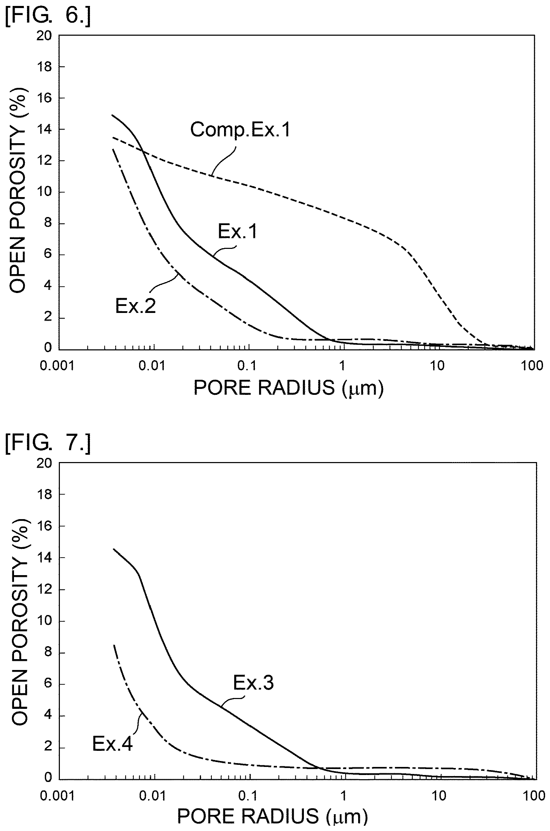

Figs. 6 and 7 show examples of a cumulative open porosity curve. Figs. 6 and 7 show that, in Examples 1 to 4, the open porosity for open pores with a radius of not less than 0.4 µm and less than 10 µm was obviously low as compared to Comparative Example 1.

The cumulative open porosity was differentiated with respect to pore radius to produce a distribution curve of open porosities and the pore radius at which the distribution curve of open porosities started to rise from larger pore radii toward smaller pore radii was determined.

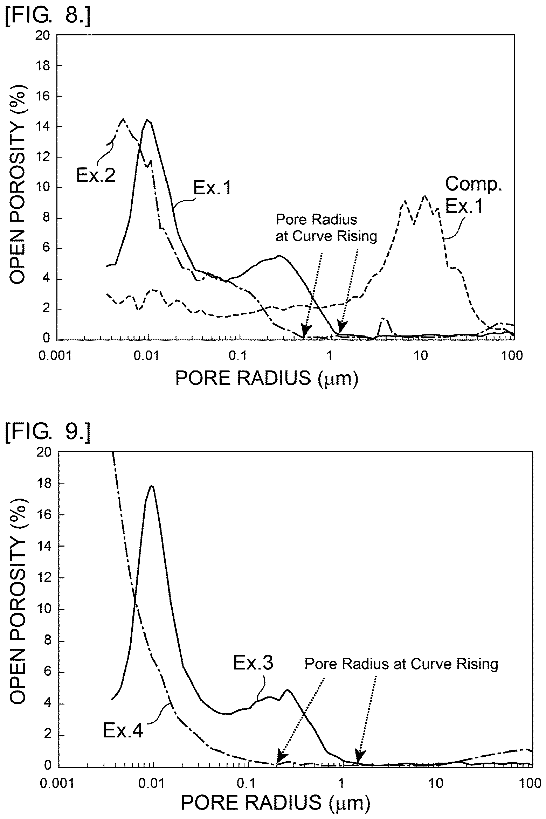

Figs. 8 and 9 show examples of a distribution curve of open porosities. Figs. 8 and 9 show that, in Examples 1 to 4, the pore radius at which the distribution curve of open porosities started to rise was obviously small as compared to Comparative Example 1.

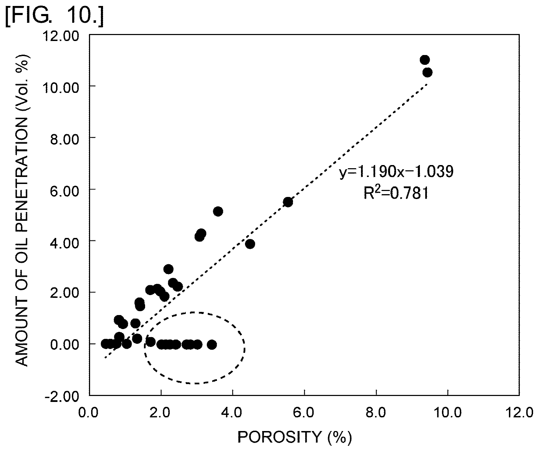

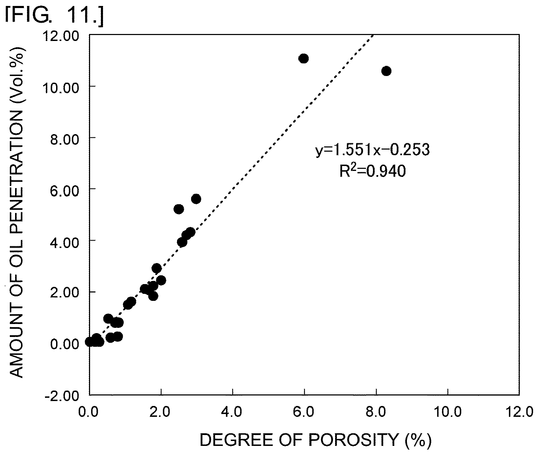

Fig. 10 is a graph showing results of experimental examples representing the relationship between open porosity for open pores with a radius of 0.4 µm or more and amount of oil penetration. Fig. 11 is a graph showing results of experimental examples representing the relationship between open porosity for open pores with a radius of not less than 0.4 µm and less than 10.0 µm and amount of oil penetration. Fig. 12 is a graph showing the relationship between pore radius at which the distribution curve of open porosities starts to rise and amount of oil penetration.

Fig. 10 shows that, in terms of the open porosity for open pores with a radius of 0.4 µm or more, no correlation between open porosity and amount of oil penetration was established in a range of open porosities for open pores with a radius of 10 µm or more (i.e., the graph portion enclosed by the broken line). The reason for this can be attributed to the possible influence of surface asperities due to the CVI process as in Example 4 on the measurement of open porosity for open pores with a radius larger than 10 µm, which avoids oil penetration into the interior of the C/C composite. In contrast, Fig. 11 shows that there was high correlation between the open porosity for open pores with a radius of not less than 0,4 µm and less than 10 µm and the amount of oil penetration. Furthermore, Fig. 12 shows that there was also high correlation between the pore radius at which the open porosity distribution curve started to rise and the amount of oil penetration.

### (Fiber Volume Content)

The carbon fiber volume content (image analysis Vf) in the C/C composite was determined in the following manner. First, the obtained C/C composite was cut into pieces in a direction perpendicular to the fibers and the cut pieces were embedded in resin, then polished, and observed at 200-fold magnification with a microscope (VHX-7000 manufactured by Keyence Corporation). Specifically, a scope of 1.5 × 1.1 mm of the cut piece was observed in five fields of view per level, the obtained image was measured in terms of the number of carbon fibers using image analysis software ("WinROOF" manufactured by Mitani Corporation), and the number of carbon fibers was divided by the measured area to obtain the number of carbon fibers per mm².

In order to check the validity of the above number of carbon fibers in the C/C composite, the number of carbon fibers per mm2 was calculated from the number of carbon fibers used in producing a molded body and the cross-sectional area of the C/C composite and comparison was made between both the calculated numbers of carbon fibers. The number of carbon fibers measured from image analysis and the number of carbon fibers per mm² of the C/C composite calculated from the number of carbon fibers used were identical in a range of ±1%.

In terms of fiber diameter, the sample was likewise observed at 1000-fold magnification with a microscope. As a result of measurement of 1330 carbon fibers, the average equivalent circle diameter was 6.56 µm and the standard deviation was 0.25.

The carbon fiber area per fiber was calculated from the obtained carbon fiber diameter and multiplied by the number of carbon fibers per mm², thus obtaining the total area of carbon fibers. As for the UD material, it can be considered to be homogeneous in the fiber length direction and, therefore, the proportion (%) of the total carbon fiber area per mm² may be defined directly as Vf.

### (Measurement of Amount of Oil Penetration)

After the sample was processed into a size of 50 mm × 50 mm × 4 mm, the processed sample was measured in terms of amount of oil penetration in the following manner.
1) The sample was immersed into oil (Highspeed Quench Oil MP manufactured by Nippon Grease Co., Ltd.) at 100°C.
2) The gauge pressure was reduced to a pressure of -0.1 atmospheres and held at this pressure for 30 minutes. Thereafter, the pressure was returned to ordinary pressure.
3) Oil on the sample surface was wiped up with KimWipes and measured in terms of mass and the mass of oil having penetrated the sample was calculated from the mass difference of the sample between before and after the oil immersion.
4) The obtained mass of oil was divided by a true density of 0.86 g/cm³ to calculate the volume of the oil and the volume of the oil was divided by the volume of the C/C composite sample immersed into the oil, thus obtaining the amount of oil penetration (% by volume).

The results are shown in Table 1 below.

**[Table 1]**

| Material | | Molded Body Vf | Overall Open Porosity | Open Porosity 0.1 *µ* m or more | Open Porosity 0.4 *µ* m or more | Open Porosity 1 *µ* m or more | Open Porosity 10 *µ* m or more | Open Porosity 0.4 *µ* m to below 10 *µ* m | Pore Radius where Open Porosity Distribution Curve Rises | Amount of Oil Penetration | Bulk Density | True Density | Total Porosity | Open Porosity | Closed Porosity | Rate of Change in Cross-Sectional Area from Molded Body to C/C | Vf of C/C Measured by Image Analysis |
|---|---|---|---|---|---|---|---|---|---|---|---|---|---|---|---|---|---|
| | | vol. % | vol. % | vol. % | vol. % | vol. % | vol. % | vol. % | *µ* m | vol. % | g/cm3 | g/cm3 | vol. % | vol. % | vol. % | % | vol. % |
| Ex. 1 | pultruded UD flat plate | 66 | 12.6 | 4.4 | 1.4 | 0.4 | 0.3 | 1.1 | 1.2 | 1.5 | 1.64 | 1.93 | 149 | 12.6 | 2.3 | 88.0 | 67 |
| Ex. 2 | pultruded UD flat plate + CVI (80 hrs) | 66 | 8.3 | 1.6 | 0.6 | 0.6 | 0.4 | 0.2 | 0.4 | 0.0 | 1.64 | 1.92 | 14.8 | 8.3 | 6.5 | 88.0 | 67 |
| Ex. 3 | pultruded UD round bar | 65 | 14.6 | 3.5 | 0.9 | 0.4 | 0.2 | 0.7 | 1.0 | 0.8 | 1.65 | | | 14.6 | | 87 4 | 67 |
| Ex, 4 | pultruded UD round bar + CVI (80 hrs) | 65 | 8.1 | 0.9 | 0.7 | 0.7 | 0.7 | 0.1 | 0.3 | 0.0 | 1.65 | | | 8.1 | | 87.4 | 67 |
| Ex. 5 | pultruded UD flat plate (many times of impregnation) | 66 | 10.2 | 2.6 | 0.8 | 0.5 | 0.3 | 0.5 | 0.9 | 1.0 | 1.64 | 1.93 | 15.3 | 20.2 | 5.1 | 88.0 | 67 |
| Ex. 6 | pultruded UD fiat plate + pitch impregnation | 66 | 8.4 | 1.4 | 0.6 | 0.4 | 0.3 | 0.3 | 0.7 | 0.3 | 1.65 | | | 8.4 | | 88.0 | 67 |
| Ex. 7 | oultruded UD flat plate + Si impregnation | 66 | 4.0 | 1.3 | 1.3 | 1.3 | 0.5 | 0.8 | 0.1 | 0.2 | 1.65 | 1.97 | 16.4 | 4.0 | 12.4 | 88.0 | 67 |
| Ex. 8 | pultruded UD flat plate + aluminum phosphate impregnation | 66 | 11.5 | 2.8 | 1.3 | 0.7 | 0.5 | 0.8 | 0.9 | 0.8 | 1.63 | 1.93 | 15.7 | 11.5 | 4.2 | 88.0 | 67 |
| Ex. 9 | 2D flat plate + CVI (80 hrs) | 50 | 5.8 | 1.7 | 0.8 | 0.7 | 0.2 | 0.6 | 0.6 | 0.2 | 1.74 | | | 5.8 | | | |
| Ex. 10 | pultruded UD flat plate + CVI only on x-z surface (80 hrs) | 66 | 11.7 | 3.1 | 0.8 | 0.6 | 0.4 | 0.4 | 0.6 | 0.6 | 1.64 | | | 11.7 | | 88.0 | 67 |
| Ex. 11 | pultruded UD flat plate + CVI only on x-y and y-z surfaces (80 hrs) | 66 | 12.9 | 4.7 | 1.5 | 0.4 | 0.3 | 1.2 | 1.3 | 1.3 | 1.64 | | | 12.9 | | 88.0 | 67 |
| Ex. 12 | pultruded UD round bar | 55 | 14.3 | 5.6 | 2.2 | 1.1 | 0.3 | 1.9 | 2.6 | 2.4 | 1.62 | | | 14.3 | | 85.4 | 58 |
| Ex. 13 | pultruded UD round bar | 58 | 14.4 | 5.5 | 2.1 | 0.9 | 0.3 | 1.8 | 2.5 | 1.8 | 1.62 | | | 14.4 | | 86.1 | 60 |
| Ex. 14 | pultruded UD round bar | 64 | 14.5 | 5.5 | 2.0 | 0.7 | 0.3 | 1.8 | 3.0 | 20 | 1.62 | | | 14.5 | | 87.0 | 65 |
| Ex. 15 | pultruded UD round bar | 65 | 14.0 | 5.2 | 17 | 0.6 | 0.1 | 1.6 | 2.1 | 2.1 | 1.63 | | | 14.0 | | 87.8 | 66 |
| Ex. 16 | pultruded UD round bar | 66 | 14.0 | 5.8 | 2.2 | 0.9 | 0.3 | 1.9 | 2.9 | 2.9 | 1.64 | | | 14.0 | | 88.9 | 67 |
| Ex. 17 | pultruded UD round bar + CVI (80 hrs) | 55 | 9.3 | 2.6 | 2.1 | 2.0 | 1.9 | 0.2 | 0.3 | 0.0 | 1.63 | | | 9.3 | | 85.4 | 58 |
| Ex. 18 | pultruded UD round bar + CVI (80 hrs) | 58 | 10.7 | 3.2 | 2.4 | 24 | 2.4 | 0.1 | 0.4 | 0.0 | 1.63 | | | 10.7 | | 86.1 | 60 |
| Ex. 19 | pultruded UD round bar + CVI (80 hrs) | 64 | 7.4 | 2.3 | 2.0 | 2.0 | 1.7 | 0.3 | 0.3 | 0.0 | 1.63 | | | 7.4 | | 87.0 | 65 |
| Ex. 20 | pultruded UD round bar + CVI (80 hrs) | 65 | 10.8 | 3.5 | 3.0 | 3.0 | 1.7 | 03 | 0.3 | 0.0 | 1.63 | | | 10.8 | | 87.8 | 66 |
| Ex. 21 | pultruded UD round bar + CVI (80 hrs) | 66 | 11.2 | 3.5 | 2.3 | 2.1 | 2.1 | 0.2 | 1.0 | 0.0 | 1.64 | | | 11.2 | | 88.9 | 67 |
| Ex. 22 | pultruded UD round bar + CVI (80 hrs) | 73 | 14.2 | 4.4 | 2.8 | 2.6 | 2.6 | 0.2 | 1.3 | 0.0 | 1.65 | | | 14.2 | | 90.1 | 72 |
| Ex. 23 | pultruded UD round bar + CVI (80 hrs) | 75 | 12.9 | 5.6 | 3.4 | 3.3 | 3.2 | 02 | 0.8 | 0.0 | 1.65 | | | 129 | | 90.8 | 74 |
| Ex. 24 | pultruded UD round bar using mesophase-based fibers | 65 | 14.6 | 3.5 | 0.9 | 0.4 | 0.2 | 0.7 | 1.0 | 0.8 | 1.81 | | | 14.6 | | 87.4 | 67 |
| Ex. 25 | pultruded UD round bar using mesophase-based fibers + CVI (80 hrs) | 65 | 8.1 | 0.9 | 0.7 | 0.7 | 0.7 | 0.1 | 0.3 | 0.0 | 1.81 | | | 8.1 | | 87.4 | 67 |
| Comp. Ex. 1 | D flat plate | 50 | 12.6 | 10.4 | 9.3 | 8.4 | 3.4 | 5.9 | 10 or more | 11.1 | 1.58 | 1.90 | 16.9 | 12.6 | 4.3 | | |
| Comp. Ex. 2 | D flat plate + CVI (80 hrs) | 50 | 8.8 | 5.8 | 5.5 | 5.4 | 2.6 | 2.9 | 10 or more | 5.6 | 1.68 | 1.91 | 12 | 8.8 | 3.2 | | |
| Comp. Ex. 3 | D flat plate + Si impregnation | 50 | 7.4 | 5.2 | 4.5 | 3.8 | 1.9 | 2.6 | 10 or more | 3.9 | 1.91 | 2.15 | 11 | 7.4 | 3.6 | | |
| Comp. Ex. 4 | UD material using UD cloth | 50 | 12.9 | 11.4 | 9.4 | 7.2 | 1.1 | 8.3 | 10 or more | 10.6 | 1.64 | | | 12.9 | | 80.1 | |
| Comp. Ex. 5 | UD material molded in mold | 54 | 6.2 | 4.2 | 3.1 | 2.2 | 0.5 | 2.6 | 10 or more | 6.1 | 1.60 | | | 6.2 | | 766 | |
| Comp. Ex. 6 | pultruded UD round bar | 73 | 14.4 | 6.8 | 3.1 | 1.7 | 0.3 | 2.8 | 6.4 | 4.2 | 1.65 | | | 14.4 | | 90.1 | 72 |
| Comp. Ex. 7 | pultruded UD round bar | 75 | 14.3 | 7.0 | 3.1 | 1.5 | 0.3 | 2.8 | 8.1 | 4.3 | 1.64 | | | 14.3 | | 90.8 | 74 |
| Comp. Ex. 8 | pultruded UD round bar | 77 | | | | | | | | | | | | | | | |
| Comp. Ex. 9 | pultruded UD round bar | 50 | 12.2 | 6.1 | 3.6 | 2.6 | 1.1 | 2.5 | 10 or more | 5.2 | 1.61 | 1.93 | 16.5 | 12.2 | 4.3 | 84 6 | 52.8 |
| Comp. Ex. 10 | pultruded UD round bar + CVI (80 hrs) | 50 | 6.6 | 4.4 | 3.3 | 1.6 | 0.8 | 2.5 | 10 or more | 3.2 | 1.65 | | | | | 84.6 | 52.8 |

From Table 1, it was confirmed that, in Examples 1 to 25, the open porosity for open pores with a radius of not less than 0.4 µm and less than 10 µm and the pore radius at which the open porosity distribution curve started to rise were small and oil penetration could be reduced as compared to Comparative Examples 1 to 10.

### (Bending Strength and Bending Modulus of Elasticity)

The samples of Examples 1 to 4, 24, and 25 and Comparative Examples 1, 2, 11, and 12 were determined in terms of bending strength and bending modulus of elasticity in the fiber direction (lengthwise direction of fibers) and the direction orthogonal to the fiber direction. In Comparative Example 11, isotropic graphite A (IG-11 manufactured by Toyo Tanso Co., Ltd.) was used at it was. In Comparative Example 12, isotropic graphite B (ISEM-8 manufactured by Toyo Tanso Co., Ltd.) was used at it was.

In measuring the bending strength and bending modulus of elasticity, each flat-plate sample of the C/C composite and each round-bar sample thereof were machined into a size of 60 mm × 10 mm × 3 mm and 60 mm × 5 mm × 3 mm, respectively, and measured in terms of dimensions and mass to obtain their bulk density. The bending strength was measured by the three-point bending test with a lower span of 40 mm. In determining the bending modulus of elasticity, stress-strain curve data between starting and ending values was divided into six equal regions, continuous two regions having a maximum sum of gradients were identified, and the modulus of elasticity was calculated using the greater of the two gradients of the two regions. The isotropic graphite was machined into a size of 60 mm × 10 mm × 10 mm and measured in terms of dimensions and mass to obtain their bulk density, and their bending strength was measured by the three-point bending test with a lower span of 40 mm. The modulus of elasticity of the isotropic graphite was measured by the resonance method.

In Comparative Examples 11 to 12, the bulk density obtained in the same manner described above was applied and the Young's modulus determined by the resonance method was applied as the bending modulus of elasticity.

### (Oxidative Consumption Rate)

The samples of Examples 1 to 4, 24, and 25 and Comparative Examples 1, 2, 11, and 12 were determined in terms of oxidative consumption rate after being held at 700°C for 2.5 hours.

Specifically, each sample with a size of 32 mm × 20 mm × 4 mm was held at 700°C for 2.5 hours with air flowed at a rate of 4.0 L/min thereto and its oxidative consumption rate was calculated from the change in mass between before and after the test.

The results are shown in Table 2 below.

**[Table 2]**

| | | Bulk Density | Bending Strength (fiber direction) | Bending Strength (perpendicular to fiber direction) | Modulus of Elasticity (fiber direction) | Modulus of Elasticity (perpendicular to fiber direction) | Oxidative Consumption Rate (2.5 hrs at 700°C) |
|---|---|---|---|---|---|---|---|
| | | g/cm3 | MPa | MPa | GPa | GPa | % |
| Ex. 1 | pultruded UD flat plate | 1.64 | 522 | 9 | 149 | 4 | 16 |
| Ex. 2 | pultruded UD flat plate + CVI (80 hrs) | 1.64 | 537 | 14 | 147 | 6 | 9 |
| Ex. 3 | pultruded UD round bar | 1.65 | 470 | | 160 | | |
| Ex. 4 | pultruded UD round bar + CVI (80 hrs) | 1.65 | 494 | | 160 | | |
| Ex. 24 | pultruded UD round bar using mesophase-based fibers | 1.81 | 531 | | 280 | | 6 |
| Ex. 25 | pultruded UD round bar using mesophase-based fibers + CVI (80 hrs) | 1.81 | 558 | | 280 | | 6 |
| Comp. Ex. 1 | 2D flat-plate material | 1.58 | 185 | | 55 | | 100 |
| Comp. Ex. 2 | 2D flat-plate material + CVI | 1.68 | 260 | | 62 | | 30 |
| Comp. Ex. 11 | isotropic graphite A | 1.78 | 39 | | 10 | | 230 |
| Comp. Ex. 12 | isotropic graphite B | 1.78 | 52 | | 10 | | 78 |

From Table 2, it was confirmed that the UD-C/Cs obtained in Examples 1 to 4, 24, and 25 had extremely low oxidative consumption rates and excellent oxidation resistance as compared to the 2D-C/Cs obtained in Comparative Examples 1 and 2 and the two types of isotropic graphite of Comparative Examples 11 and 12. Particularly in Examples 24 and 25 where mesophase pitch-based carbon fibers were used, it was confirmed that the oxidative consumption rate was still lower and the bending strength and bending modulus of elasticity could be further increased.

### Reference Signs List

- 1, 10: corner portion
- 2, 12: first flat plate
- 2a, 3a: tongue
- 2b, 3b: groove
- 3, 13: second flat plate
- 4: pin
- 14: bolt
- 15: 2D-C/C composite
- 16: T-shaped pin

## Claims

1. A C/C composite in which, in measurement for open pores by mercury porosimetry, an open porosity for open pores with a radius of not less than 0.4 µm and less than 10 µm in the C/C composite is 2.0% or less.

2. A C/C composite in which, in a distribution curve of open porosity versus pore radius measured by mercury porosimetry, the pore radius at which the distribution curve starts to rise from larger pore radii toward smaller pore radii is 3.0 µm or less.

3. The C/C composite according to claim 1 or 2, wherein a number of open pores along a direction of fibers is larger than a number of open pores along a direction orthogonal to the direction of fibers.

4. The C/C composite according to any one of claims 1 to 3, wherein a carbon fiber volume content determined by image analysis is not less than 58% and not more than 74%.

5. The C/C composite according to any one of claims 1 to 4, comprising mesophase pitch-based carbon fibers.

6. The C/C composite according to any one of claims 1 to 5, wherein at least part of the open pores are densified by a densifying material.

7. The C/C composite according to claim 6, wherein at least part of the densifying material is carbon derived from a CVI process.

8. The C/C composite according to claim 6 or 7, wherein at least part of the densifying material is silicon carbide.

9. The C/C composite according to any one of claims 6 to 8, wherein at least part of the densifying material is a carbonaceous matter derived from a pitch or a thermosetting resin.

10. The C/C composite according to any one of claims 6 to 9, wherein at least part of the densifying material is aluminum phosphate or a mixture of aluminum phosphate and aluminum oxide.

11. The C/C composite according to any one of claims 1 to 10, being a unidirectional C/C composite comprising unidirectionally oriented carbon fibers and derived from a molded body made by pultrusion molding.

12. A heat-treatment jig made of the C/C composite according to any one of claims 1 to 11.

13. A heat-treatment jig made of a unidirectional C/C composite that comprises unidirectionally oriented carbon fibers and is derived from a molded body made by pultrusion molding.

14. The heat-treatment jig according to claim 12 or 13, being used in oil quenching.

15. The heat-treatment jig according to claim 12 or 13, being used in gas quenching.

16. The heat-treatment jig according to any one of claims 12 to 15, wherein a corner portion has a structure in which a box joint is secured with pins.

17. The heat-treatment jig according to any one of claims 12 to 16, wherein a corner portion is reinforced by a 2D-C/C composite.

18. A method for producing a C/C composite, the method comprising the steps of:
impregnating unidirectionally aligned carbon fibers with a thermosetting resin composition and then pultruding the carbon fibers impregnated with the thermosetting resin composition to obtain a molded body; and
firing the molded body to carbonize the thermosetting resin composition, thus obtaining a C/C composite.

19. The method for producing a C/C composite according to claim 18, wherein a carbon fiber volume content in the molded body is not less than 55% and not more than 75%.

20. The method for producing a C/C composite according to claim 18 or 19, the method further comprising a densifying step of densifying at least part of open pores in the C/C composite.

21. The method for producing a C/C composite according to claim 20, wherein the densifying step comprises the step of impregnating the open pores in the C/C composite with a pitch or a thermosetting resin and carbonizing the pitch or the thermosetting resin.

22. The method for producing a C/C composite according to claim 20 or 21, wherein the densifying step comprises the step of subjecting the C/C composite to a CVD process.

23. The method for producing a C/C composite according to any one of claims 20 to 22, wherein the densifying step comprises the step of impregnating the open pores in the C/C composite with molten silicon and converting the silicon to silicon carbide.

24. The method for producing a C/C composite according to any one of claims 20 to 23, wherein the densifying step comprises the step of impregnating the open pores in the C/C composite with aluminum phosphate and thermally treating the C/C composite.

25. A method for producing a heat-treatment jig made of a C/C composite, the method comprising the step of obtaining the C/C composite using the method for producing a C/C composite according to any one of claims 18 to 24.
